# EUROPÄISCHE PATENTANMELDUNG

(11) **EP 0 970 606 A1**
(43) Veröffentlichungstag der Anmeldung: **12.01.2000**
(21) Anmeldenummer: 98630037.4
(22) Anmeldetag: 10.07.1998
(51) Int. Cl.: A01K 27/00

(54) **Hundeleine**

(71) Anmelder: Holger, Richter, 2153 Luxemburg (LU)
(72) Erfinder: Holger, Richter, 2153 Luxemburg (LU)
(74) Vertreter: Waxweiler, Jean

(57) **Zusammenfassung**

Die Erfindung betrifft eine Hundeleine, mit einem vorzugsweise aus zwei Halbschalen (15,16) bestehenden, mit der Hand ergreifbarem, Gehäuse, einer in dem Gehäuse vorgesehenen Aufwickeleinrichtung (21) für eine Leine (22) zum Ausgeben der daraufgewickelten Leine (22) unter Zug auf die Leine (22) und zum selbsttätigen Aufwickeln der Leine (22) bei Verringerung des Zuges auf der Leine (22), einer im oder am Gehäuse angeordnete Leinenkappvorrichtung (27,28), durch welche die Leine (22) hindurchläuft und Mittel (29) zum Betätigen der Leinenkappvorrichtung (27,28) zum Durchtrennen der Leine.

## Beschreibung

Die Erfindung betrifft eine Hundeleine, mit einem vorzugsweise aus zwei Halbschalen bestehenden, mit der Hand ergreifbaren Gehäuse, einer in dem Gehäuse vorgesehene Aufwickeleinrichtung für eine Leine zum Ausgeben der daraufgewickelten Leine unter Zug auf die Leine und zum selbsttätigen Aufwickeln der Leine bei Verringerung des Zuges auf der Leine.

Handelsübliche Hundeleinen bestehen aus einem, vorzugsweise aus zwei aneinandergefügten Halbschalen gebildeten hohlen Gehäuse, wobei der Haltegriff auch von den Halbschalen gebildet werden kann. Dieser Griff muß aber nicht zwingenderweise in das Gehäuse integriert sein. Im Innenraum des hohlen Gehäuses ist ein Auf- und Abwickelmechanismus vorgesehen, auf welchem eine Leine aufgewickelt ist, welche beim Gebrauch zum Führen eines Hundes durch Zug auf die Leine diese abwickelt oder dieselbe selbsttätig aufwickelt, wenn der Zug auf die Leine nachläßt. Die Leine tritt durch ein Loch an der Vorderseite des Gehäuses aus.

Bei Benutzung solcher Leinen könnten Bedingungen auftreten, welche zu Gefahren für den Hund oder diesen führenden Menschen führen. Insbesondere können automatisch betätigte Türen, wie sie in Bussen, öffentlichen Verkehrsmitteln, Aufzügen, öffentlichen und anderen Gebäude mit viel Publikumsverkehr, z.B. Supermärkten, Banken, Flughafengebäude, usw., zu finden sind, zu Gefahrenquellen werden. Geht der Hundeführer mit seinem Hund durch eine solche Tür im Augenblick des Schließens derselben, ist es durchaus möglich, dass der Hund oder der Mensch sich noch vor der sich vor ihm schließenden Tür befindet, so dass die Leine von der Tür eingeklemmt wird. Dies kann je nach Lage zu Verletzungen bei Mensch und Tier und sogar bis zum Tode des geführten Hundes führen.

Ein weiterer Nachteil handelsüblicher Leinen ist, dass bei Dunkelheit, die ausgezogene Leine von anderen Verkehrsteilnehmern oder im allgemeinen schlecht erkennbar ist und dies zu schweren Unfällen führen kann.

Ein weiterer Nachteil handelsüblicher Leinen ist, dass bei Dunkelheit der Boden vor dem Hundeführer dunkel ist und etwaige herumliegende Gegenstände oder dergleichen schwer erkennbar sind und zu Gefahrenquellen werden können.

Die Aufgabe der Erfindung ist es, den Umgang mit Hunden sicherer zu gestalten.

Erfindungsgemäß wird diese Aufgabe bei einer Hundeleine der Eingangs beschriebenen Art gelöst durch eine im oder am Gehäuse angeordnete Leinenkappvorrichtung, durch welche die Leine hindurchläuft und Mittel zum Bestätigen der Leinenkappvorrichtung zum Durchtrennen der Leine.

Vorteilhafte Ausführungsformen der Hundeleine nach der Erfindung sind in den abhängigen Patentansprüchen beschrieben.

Durch die Leinenkappvorrichtung der erfindungsgemäßen Hundeleine ist es bei Gefahr möglich, die Verbindung zwischen Hund und Mensch und so die oben genannte möglichen schweren Folgen einer solchen Gefahrensituation zu vermeiden. Die wahlweise Anbringung von reflektierendem Material am Gehäuse und/oder das Einarbeiten solchen Materials in die Leine selbst, verbessert die Erkennung der an einer erfindungsgemäßen Leine bei Dunkelheit wesentlich. Das wahlweise Versehen einer Lichtquelle in oder an der Hundeleine ermöglicht das Erkenne von auf dem Boden herumliegenden Gegenständen.

Die Erfindung wird nun an Hand einer bevorzugten Ausführungsform derselben unter Bezugnahme auf die beiliegenden Zeichnungen beispielsweise beschrieben. In den Zeichnungen sind:
Fig. 1 eine Ansicht einer Seite, teilweise im Schnitt, der Hundeleine nach der Erfindung;
Fig. 2 eine Ansicht der gegenüberliegenden Seite der Hundeleine nach der Erfindung;
Fig. 3 eine Ansicht von oben der Hundeleine nach der Erfindung;

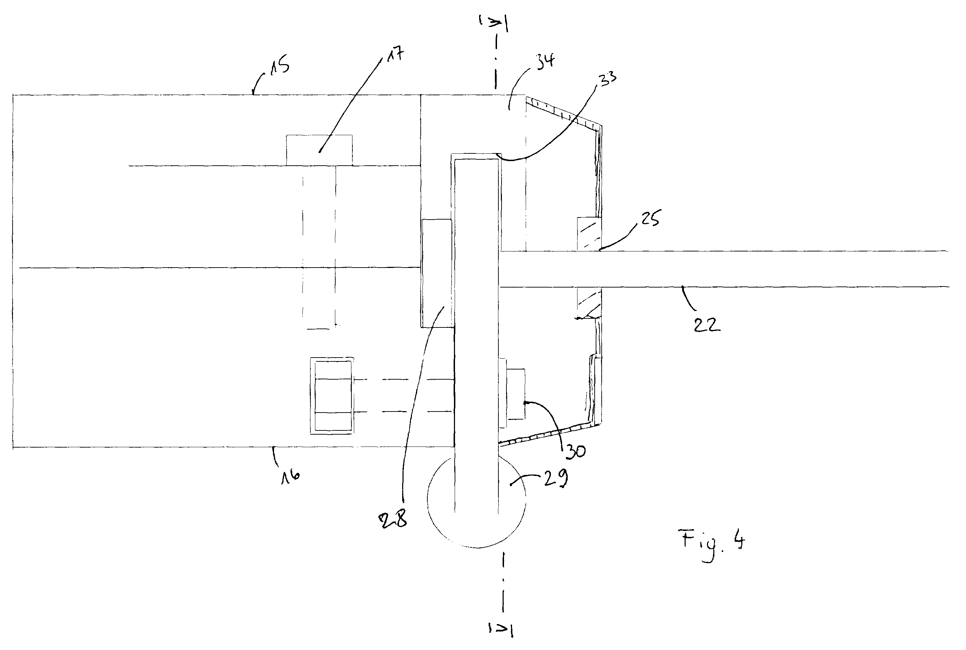

Fig. 4 eine Ansicht wie in Fig. 3, teilweise im Schnitt, der Hundeleine nach der Erfindung;

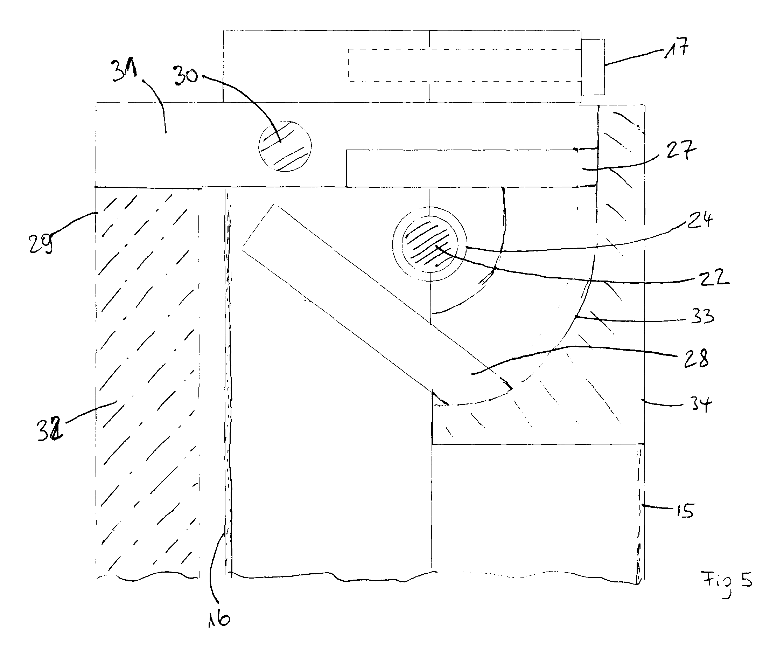

Fig. 5 ein Querschnitt entlang der Linie V-V der Hundeleine nach der Erfindung; und
Fig. 6 eine Frontansicht der Hundeleine nach der Erfindung.

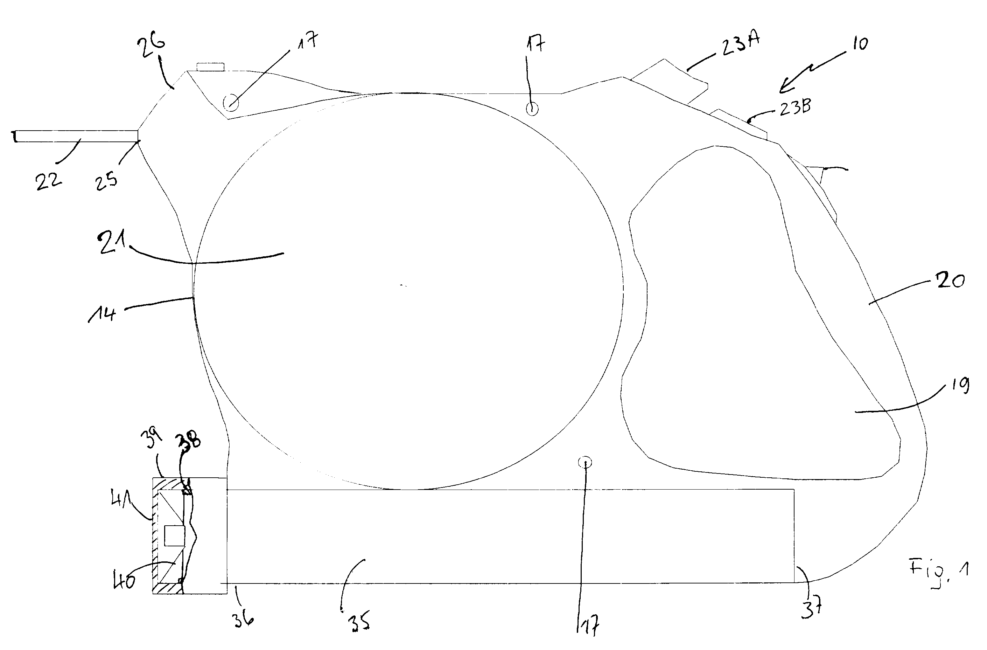

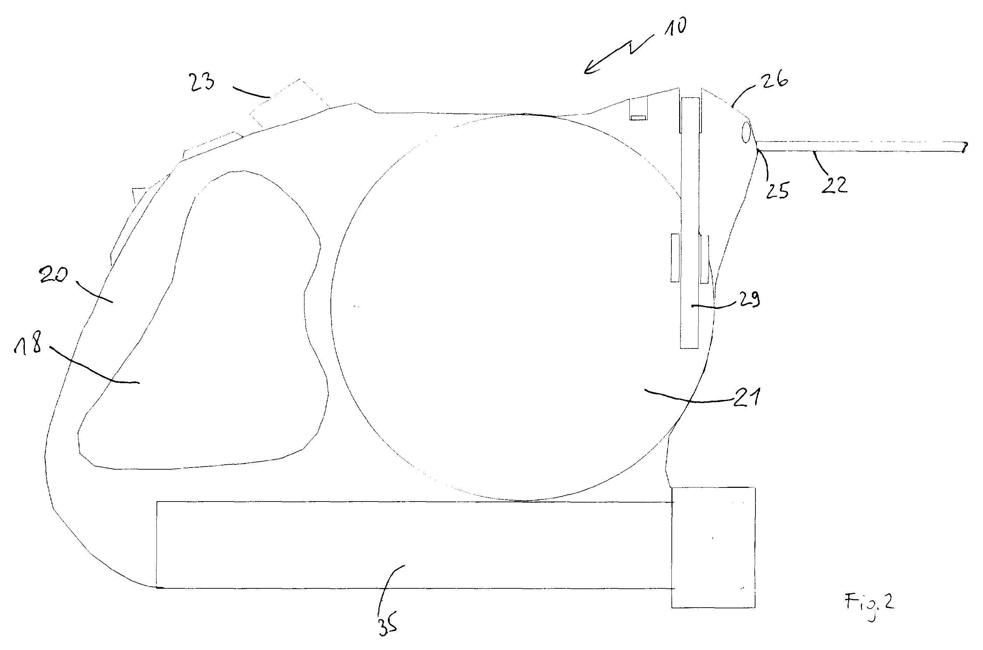

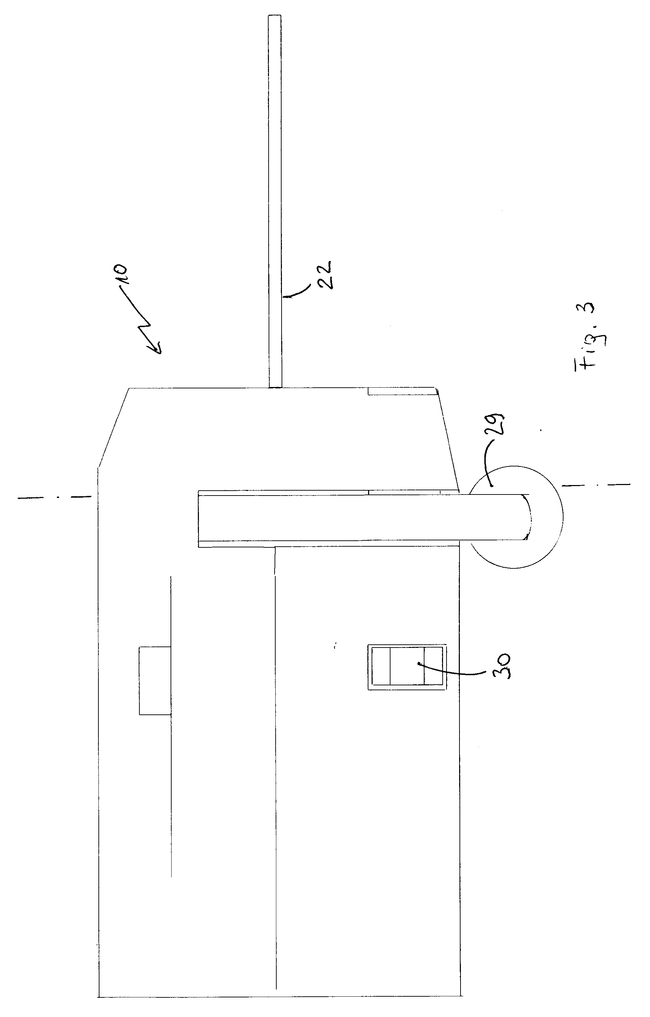

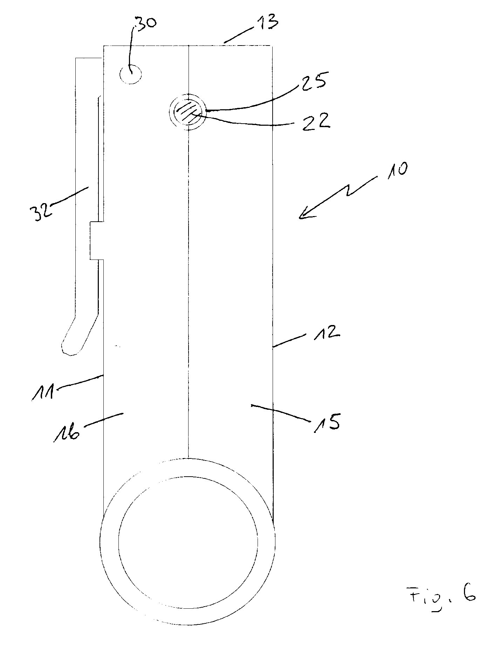

Aus den Figuren 1, 2, 3 und 6, welche verschiedene Ansichten der Hundeleine nach der Erfindung darstellen, ist die äußere Form der Hundeleine 10 ohne weiteres entnehmbar. In Fig. 1 ist eine Ansicht der Seite 11, in Fig. 2 eine Ansicht der Seite 12, in Fig. 3 eine Ansicht der Seite 13 und in Fig. 6 eine Ansicht der Seite 14 der erfindungsgemäßen Hundeleine dargestellt.

Die Hundeleine hat ein aus zwei Halbschalen 15, 16 gebildetes hohle Gehäuse, welche zueinander gefügt werden und z.B. mittels Schrauben 17 miteinander fest verbunden sind. Die beiden Halbschalen 15, 16 haben in der dargestellten Ausführungsform außerdem Aussparungen 18, 19, welche einen Halte- oder Tragegriff 20 bilden.

Im Innern des Gehäuses ist ein an sich bekannter Auf- und Abwickelmechanismus, angedeutet durch die Bezugszahl 21, vorgesehen, welcher nicht im einzelnen dargestellt zu werden braucht, auf dem eine Leine 22 aufgewickelt werden kann, welcher Mechanismus es erlaubt, die aufgewickelte Leine 22 durch Zug auf sie abzuwickeln und welcher, bei Nachlassen des Zuges die Leine automatisch wieder aufwickelt. Der Auf- und Abwickelmechanismus 21 kann mittels einer an sich bekannten Stopvorrichtung 23A im Abwickeln der Leine gestoppt und durch einen Feststeller 23B arretiert werden. Beide Vorrichtungen sind an sich bekannt und bedürfte keiner weiteren Beschreibung.

Die Leine 22 durchläuft ein Loch 24 in einer Innenwand des Gehäuses und ein Loch 25 in der Außenwand an der Seite 14 des Gehäuses. Die Löcher 24 und 25 fluchten miteinander. Das Loch 25 befindet sich in einem Vorsprung 26, in welchem, zwischen den Löchern 24 und 25, eine aus einem feststehenden Messer 27 und einem beweglichen Messer 28 bestehende Leinenkappvorrichtung untergebracht ist; dabei läuft die Leine auf der Strecke zwischen den Löchern 24 und 25 zwischen den beiden Messern 27, 28 hindurch.

Das bewegliche Messer 28 ist auf einem L-förmigen Betätigungshebel 29 festgemacht, welcher in etwa seinem Scheitel mittels einer Schraube 30 an einer Gehäusehalbschale 16 derart angelenkt ist, dass einer seiner Schenkel 31 senkrecht zum Leinenstück zwischen den Löchern 24, 25 steht, während sein anderer Schenkel 32 außerhalb des Gehäuses parallel zur Außenfläche der einen Halbschale 16 verläuft. Wenn der Betätigungshebel 29 aus Metall gefertigt ist, kann das bewegliche Messer 27 auch durch Scharfschleifen eines Randes des Schenkels 31 gebildet werden. Selbstverständlich sind andere Lösungsmöglichkeiten für den Betätigungshebel 29 und das bewegliche Messer 27, welche eine äquivalente Wirkung haben, auch Gegenstand der Erfindung.

Das feststehende Messer 28 ist an einer von den Halbschalen 15 und 16 zwischen ihren gebildeten Querwand derart schräg befestigt, dass es sich unterhalb des Loches 24 befindet und mit dem beweglichen Messer 27, beim Bewegen desselben, als Schere wirkt und die Leine durchtrennt, d.h. das bewegliche Messer 27 bewegt sich unter Berührung am feststehenden Messer 28 vorbei. Es ist auch möglich, das feststehende Messer 28 als Amboß auszuführen und so bezüglich des beweglichen Messers 27 zu befestigen, dass dies am Ende seiner Bewegung über der ganzen Länge seiner Schneide, wie bei einer Rebschere, auf den Amboß drückt und die Leine durchtrennt. Das feststehende Messer 28 kann an seinem einen Ende mit einem Loch versehen sein, mit welchem es in die Schraube 30 eingehängt ist, während das andere Ende in einer Kerbe im den weiter unten beschriebenen Führungsblock 34 eingelegt ist.

Das freie Ende des einen Schenkels 31 des Betätigungshebels 29 wird von einer Führung 33 in einem Führungsblock 34, welcher ein integraler Teil der einen Halbschale 15 sein oder an dieser befestigt sein kann, auf einen kreisförmigen Weg um die Befestigungsschraube 30 in einer zur Leine 22 vorzugsweise senkrechten Ebene geführt.

Die soweit beschriebene Hundeleine ermöglicht es, im Falle einer Gefahrensituation für Hund und/oder Mensch, durch Betätigen, d.h. Anheben, des Betätigungshebels 29 die Leine 22 durch die Zusammenwirkung der Messer 27 und 28 zu kappen. Andere Betätigungsmöglichkeiten mit äquivalenter Konstruktion und Wirkung sind als Gegenstand der Erfindung anzusehen.

Zur Erhöhung der Sicherheit des Umganges mit Hunden kann am oder im von den Halbschalen 15, 16 gebildeten Gehäuse ein zylindrischer Hohlraum 35 gebildet werden, welcher an einem Ende 36 offen und am anderen Ende 37 geschlossen ist. Am offenen Ende 36 ist eine Gewinde 38 vorgesehen, auf welches ein Deckel 39 aufschraubbar ist, in welchem ein Lichtreflektor mit Glühbirne 40 hinter einer Lichtaustrittfläche 41 angeordnet ist. Der Hohlraum 35 ist für die Aufnahme von Batterien ausgelegt. Auch ist die notwendige Verkabelung (nicht dargestellt), mit einem Schalter 42 im Handgriff 20, zum Betreiben der Glühbirne 40 vorgesehen. Die Glühbirne 40 ermöglicht es den Boden vor der die Hundeleine benutzenden Person auszuleuchten und so Gefahren durch herumliegende Gegenstände, oder dergleichen zu begegnen. Es ist auch möglich, den Hohlraum beide Enden 36, 37 offen zu machen, wobei dann allerdings am hinteren Ende 37 Mittel vorzusehen sind, mit welchen der Hohlraum hier nach Einlegen der Batterie verschlossen wird. In diesem Fall kann man am vorderen Ende 36 anstatt des Gewindes einen Wulst vorsehen, in welchem der Reflektor 40 mit der Glühbirne einsetzbar ist.

Zur weiteren Erhöhung der Sicherheit des Umgangs mit Hunden ist es möglich die Außenflächen der das Gehäuse bildenden Halbschalen 15, 16 mit reflektierendem Material zu versehen, welches das von herannahenden Fahrzeugen bei Dunkelheit emittierte Licht reflektiert und die Hundeleine für den Fahrer des Fahrzeuges sichtbar macht und damit auf den Hundehalter und den Hund aufmerksam macht. Besonders vorteilhaft ist es mindestens 10% der Oberfläche mit reflektierendem Material zu versehen.

Zur Erhöhung der Sicherheit des Umgangs mit Hunden ist es außerdem möglich, reflektierendes Material in die Leine 22 einzuarbeiten und so auch diese durch Reflektieren des Lichtes herannahender Fahrzeuge bei Dunkelheit sichtbar zu machen.

## Patentansprüche

1. Hundeleine, mit einem vorzugsweise aus zwei Halbschalen (15,16) bestehenden, mit der Hand ergreifbarem, Gehäuse, einer in dem Gehäuse vorgesehenen Aufwickeleinrichtung (21) für eine Leine (22) zum Ausgeben der daraufgewickelten Leine (22) unter Zug auf die Leine (22) und zum selbsttätigen Aufwickeln der Leine (22) bei Verringerung des Zuges auf der Leine (22), gekennzeichnet durch eine im oder am Gehäuse angeordnete Leinenkappvorrichtung (27,28), durch welche die Leine (22) hindurchläuft und Mittel (29) zum Betätigen der Leinenkappvorrichtung (27,28) zum Durchtrennen der Leine.

2. Hundeleine nach Anspruch 1, dadurch gekennzeichnet, dass die Leinenkappvorrichtung (27,28) aus einem feststehenden, auf einer Seite der Leine (22) angeordneten Messer (28) und einem beweglichen, auf der anderen Seite der Leine (22) angeordneten Messer (27) besteht, welches bei Betätigung der Leinenkappvorrichtung (27,28) sich auf die Leine (22) und das gegenüberliegende feststehende Messer (28) zu und an ihm vorbeibewegt und durch Scherenwirkung die Leine (22) durchtrennt.

3. Hundeleine nach Anspruch 2, gekennzeichnet durch einen mit einem Punkt am Gehäuse angelenkten Betätigungshebel (29) als Mittel (29) zum Betätigen der Leinenkappvorrichtung (27,28), welcher das bewegliche Messer (27) trägt und bei Betätigung das bewegliche Messer (27) derart bewegt, dass es mit dem feststehenden Messer (28) wie eine Schere wirkt.

4. Hundeleine nach Anspruch 3, dadurch gekennzeichnet, dass der Betätigungshebel (29) L-förmig ist, mit dem Scheitelpunkt am Gehäuse angelenkt ist und einen Schenkel (32) an der Außenseite einer Halbschale (16) anliegt, während der andere, das Messer (27) tragende Schenkel (31) sich die Leine (22) erstreckt.

5. Vorrichtung nach Anspruch 4, gekennzeichnet durch eine halbkreisförmige Führung (33) für das freie Ende des das bewegliche Messer tragenden Schenkels (31).

6. Hundeleine nach einem der Ansprüche 2 bis 5, dadurch gekennzeichnet, dass das feststehende Messer (28) als Amboß ausgebildet ist, auf den sich das bewegliche Messer (27) zu bewegt und dagegendrückt, ohne daran vorbeizugehen.

7. Hundeleine nach einem der Ansprüche 1 bis 6, dadurch gekennzeichnet, dass die Außenfläche einer oder beider Halbschalen mit reflektierendem Material beschichtet sind.

8. Hundeleine nach einem der Ansprüche 1 bis 7, dadurch gekennzeichnet, dass reflektierendes Material in der Leine (22) verarbeitet ist.

9. Hundeleine nach einem der Ansprüche 1 bis 8, gekennzeichnet durch einen von den beiden Halbschalen (15,16) gebildeten Hohlraum (35) mit einem hinteren Ende (37) und einem vorderen Ende (36), zur Aufnahme einer oder mehrerer Batterien, und einem am vorderen Ende (36) des Hohlraums (35) befestigbaren Lichtreflektor (40) mit Glühbirne.

10. Hundeleine nach Anspruch 9, dadurch gekennzeichnet, dass das hintere Ende (37) des Hohlraums (35) geschlossen ist oder Mittel vorgesehen sind, um es zu verschliessen.
